# EUROPÄISCHE PATENTSCHRIFT

(11) **EP 1 815 167 B1**
(45) Veröffentlichungstag und Bekanntmachung des Hinweises auf die Patenterteilung: **06.08.2008**
(21) Anmeldenummer: 05770418.1
(22) Anmeldetag: 06.08.2005
(51) Int. Cl.: F16H 61/02, F16H 59/02

(54) **VORRICHTUNG ZUM STEUERN EINES AUTOMATISCH SCHALTENDEN GETRIEBES**
DEVICE FOR CONTROLLING AN AUTOMATIC GEARBOX
DISPOSITIF DE COMMANDE D'UNE BOITE DE VITESSES AUTOMATIQUE

(30) Priorität: 23.10.2004 DE 102004051639
(43) Veröffentlichungstag der Anmeldung: 08.08.2007
(73) Patentinhaber: Bayerische Motorenwerke Aktiengesellschaft, 80809 München (DE)
(72) Erfinder: FUCHS, Emanuel, Rochester 48307, Mi (US); FALCK, Tobias, 81543 München (DE); DUBREUIL, Cedric, 13210 Saint-Rémy de Provence (FR); GIELISCH, Frank, 85757 Karlsfeld (DE); RAHIMI-NEDJAT, Eva-Farangis, 64646 Heppenheim (DE)
(86) Internationale Anmeldenummer: PCT/EP2005/008553
(87) Internationale Veröffentlichungsnummer: WO 2006/045365

(56) Entgegenhaltungen:
- EP-A- 1 304 511
- WO-A-96/32299
- WO-A-20/05085682
- DE-A1- 3 924 318
- DE-A1- 4 119 076
- DE-A1- 10 125 698
- DE-A1- 10 157 393
- DE-C2- 4 120 603
- FR-A- 2 699 978
- US-A- 5 819 585
- US-B1- 6 363 805

## Beschreibung

Die Erfindung bezieht sich auf eine Vorrichtung zum Steuern eines automatisch schaltenden Getriebes.

Eine derartige Vorrichtung ist beispielsweise aus der DE 197 36 406 A1 bekannt. Diese bekannte Vorrichtung weist eine erste Wähleinrichtung in Form eines Wählhebels auf, mit dem die in einem Automatikmodus einstellbaren Fahrstufen P, R, N, D festlegbar sind. Mit einer zweiten Wähleinrichtung in Form eines zwei Schalter aufweisenden Lenkrades sind in einem Manuellmodus die Gänge des Getriebes stufenweise manuell hoch- oder rückschaltbar. Die bekannte Vorrichtung weist ein elektronisches Getriebesteuergerät auf, das bei Automatikgetrieben oder automatisierten Handschaltgetrieben üblich ist. Die Grundidee der aus der DE 197 36 406 A1 bekannten Vorrichtung ist, dass mit Betätigen der zweiten Wähleinrichtung ausgehend vom Automatikmodus der Manuellmodus aktiviert wird. Dieser Manuellmodus wird beibehalten, bis Situationen erkannt werden, in denen der Automatikmodus wünschenswert ist.

Mit dieser bekannten Vorrichtung können bei einem Übergang vom Manuellmodus zum Automatikmodus für den Fahrer unerwartete Gangwechselvorgänge vom Getriebe vorgenommen werden. Einerseits kann ein Übergang auf den Automatikmodus nach einem längeren Beibehalten des Manuellmodus vom Fahrer nicht nachvollzogen werden. Andererseits sind die den beiden Modi zugeordneten Softwaremodule im Steuergerät nicht aufeinander abgestimmt, so dass unkomfortable Gangwechselvorgänge auftreten können. Insbesondere ein Beibehalten des Manuellmodus für eine vorgegebene Zeit ist besonders nachteilig, da nach Ablauf der vorgegebenen Zeit gegebenenfalls bestimmte noch nicht abgeschlossene Schaltabläufe unterbrochen werden müssen. Darüber hinaus sind mit einem Wechsel von einem Automatikmodus in den Manuellmodus und wieder zurück weitere Schnittstellenfunktionalitäten oder spezielle komplementäre Funktionen, wie z. B. die Ganganzeige oder die Ausgestaltung von automatischen Hoch-/Rückschaltungen an Drehzahlgrenzen u. a., betroffen.

Die FR-A-2 699 978 offenbart eine Vorrichtung unit allen Merkmalen des Oberbegriffes des Anspruchs 1.

Es ist Aufgabe der Erfindung, eine komfortoptimierte Schaltstrategie für Automatikgetriebe bzw. automatisierte Getriebe zu entwickeln.

Diese Aufgabe wird erfindungsgemäß durch die Merkmale des Patentanspruchs 1 gelöst. Vorteilhafte Weiterbildungen sind die Gegenstände der abhängigen Patentansprüche.

Mit der erfindungsgemäßen Vorrichtung wird insbesondere durch entsprechende Programmierung des elektronischen Steuergeräts bei Betätigung der zweiten Wähleinrichtung ausgehend vom Automatikmodus eine unmittelbare Hoch- bzw. Rückschaltung zugelassen, wobei jedoch kein Übergang in den Manuellmodus vorgenommen wird. Ein an diese Hoch- bzw. Rückschaltung anschließender Gangwechsel wird entsprechend der Schaltlogik des Automatikmodus durchgeführt. Bei Mehrfachbetätigung der zweiten Wähleinrichtung können auch mehrfache unmittelbare Hoch- bzw.

Rückschaltungen zugelassen werden, aber stets ohne den Automatikmodus zu verlassen. Denn nur die dem Automatikmodus zugrunde liegende Schaltlogik überwacht auch Betriebsparameter, die insbesondere im Hinblick auf den Komfort bei Gangwechselvorgängen zu berücksichtigen sind. Die zweite Wähleinrichtung kann auch ein Sporttaster oder ein anderer Taster sein, durch den entsprechend seiner funktionellen Belegung zumindest unter anderem eine unmittelbare Hoch- bzw. Rückschaltung willkürlich ausgelöst wird.

Vorzugsweise ist vorgesehen, dass ausgehend vom Automatikmodus vor Betätigung der zweiten Wähleinrichtung ein anderes Bedienelement betätigt werden muss, um in den Manuellmodus umzuschalten. Wird jedoch die zweite Wähleinrichtung ohne vorheriger Betätigung des anderen Bedienelements betätigt, wird oben genannte Funktion eingeleitet.

Vorzugsweise kann die Dauer der Betätigung der zweiten Wähleinrichtung erfasst werden und der aufgrund der unmittelbar zugelassenen Hoch- bzw. Rückschaltung eingelegte Gang zumindest für die Dauer der Betätigung der zweien Wähleinrichtung beibehalten werden. Mit dieser Weiterbildung der Erfindung kann der Fahrer bewusst die Mindestdauer der Beibehaltung dieses Ganges bestimmen.

In einer Weiterbildung der Erfindung enthält die Schaltlogik des Automatikmodus eine Gangwechselverhinderung, die nach Durchführung eines Gangwechsels, hier nach Durchführung der durch die zweite Wähleinrichtung ausgelösten Hoch- oder Rückschaltung, bis zum Vorliegen eines definierten Ereignisses einen weiteren Gangwechsel verhindert, wenn dieser gemäß den in der Schaltlogik vorliegenden Schaltkennlinien grundsätzlich vorgegeben wird. Hierdurch werden Pendelschaltungen verhindert.

Ein definiertes Ereignis ist beispielsweise zunächst eine Änderung eines Leistungsanforderungssignals und/oder der Fahrzeuggeschwindigkeit nach einer durch die Betätigung der zweiten Wähleinrichtung ausgeführten Hoch- oder Rückschaltung.

Das definierte Ereignis ist oder umfasst vorzugsweise auch die Unterschreitung eines vorgegebenen Schwellwertes hinsichtlich der Änderung des Leistungsanforderungssignals und/oder der Fahrzeuggeschwindigkeit.

Dies setzt vorzugsweise voraus, dass nach der durch die Betätigung der zweiten Wähleinrichtung ausgeführten Hoch- bzw. Rückschaltung zunächst eine Änderung des Leistungsanforderungssignals und/oder der Fahrzeuggeschwindigkeit abgewartet wird. Denn anderenfalls würde die Gangwechselverhinderung nicht wirksam sein, wenn das Leistungsanforderungssignal und die Fahrzeuggeschwindigkeit konstant bleiben würde, was zu einer sinnlosen Pendelschaltung führen könnte. Ein definiertes Ereignis ist also vorzugsweise zunächst das Abwarten einer Änderung des Leistungsanforderungssignals und/oder der Fahrzeuggeschwindigkeit und das anschließende Unterschreiten eines vorgegebenen Schwellwertes hinsichtlich der Änderung des Leistungsanforderungssignals und/oder der Fahrzeuggeschwindigkeit.

Dabei spielt nur der Betrag der Änderung, nicht die Richtung der Änderung eine Rolle. Ein Leistungsanforderungssignal kann beispielsweise ein Zugkraftwunsch eines Fahrerassistenzsystems oder ein Fahrpedalwinkel oder ein dem Bremsdruck proportionales Signal sein, aus dem jeweils der (positive oder negative) Zugkraftwunsch des Fahrers ermittelbar ist. Diese Weiterbildung ist vor allem im Zusammenhang mit einem Beschleunigungswunsch des Fahrers relevant, nach dem normalerweise ein Einpendeln auf einen neuen stationären Betriebspunkt folgt. Hierzu wünscht der Fahrer üblicherweise eine Rückschaltung und tritt gleichzeitig das Fahrpedal durch. Solange sich also der Fahrpedalwinkel in einem vorgegebenen Toleranzband ändert und somit ein stationärer Betriebspunkt nicht erreicht wird, wird erfindungsgemäß ein Gangwechsel verhindert. Auch hier steht die Vermeidung unerwünschter Pendelschaltungen im Vordergrund.

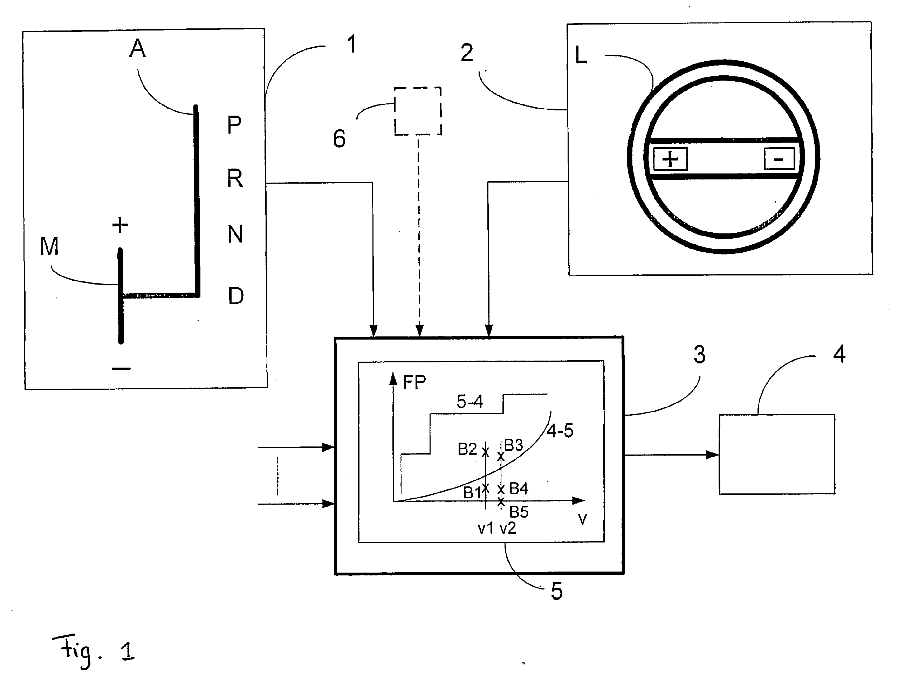

Die Erfindung wird mit einem Ausführungsbeispiel näher erläutert. Dazu ist in der Zeichnung ein Überblick über eine für die Erfindung vorteilhafte Gesamtanordnung dargestellt.

Sie zeigt eine Vorrichtung zum Steuern eines Automatikgetriebes 4 für ein Kraftfahrzeug mit einer ersten Wähleinrichtung 1 in Form eines nicht dargestellten Wählhebels, der in mindestens einer Gasse (erste Gasse) zur Festlegung der in einem Automatikmodus A einstellbaren Fahrstufen P,R,N, und D bewegbar ist. Weiterhin ist eine zweiten Wähleinrichtung 2 in Form eines Hochschalttasters (+ Taster) und eines Rückschalttasters (- Taster) dargestellt, durch die in einem Manuellmodus M die Gänge des Getriebes stufenweise manuell hoch- oder rückschaltbar sind, wenn ausgehend vom Automatikmodus A vor Betätigung der zweiten Wähleinrichtung 2 ein anderes Bedienelement, hier die Wähleinrichtung 1, zur Umschaltung in den Manuellmodus M betätigt wurde. Im dargestellten Beispiel muss zur Umschaltung in den Manuellmodus M die Wähleinrichtung 1 zumindest in die zweite Gasse bewegt werden, in der ebenfalls mit einem Hoch- und Rückschalttaster die Gänge des Getriebes stufenweise manuell hoch- oder rückschaltbar sein können.

Weiterhin ist ein elektronisches Steuergerät 3 vorhanden, dass verschiedene Eingangssignale, einschließlich der Signale der Wähleinrichtungen 1 und 2, erhält. Abhängig von diesen Eingangssignalen werden mittels einer programmierten Schaltlogik die Stellelemente des Automatikgetriebes 4 zum Wechseln und Einlegen vorgegebener Gänge angesteuert.

Bei Betätigung der zweiten Wähleinrichtung 2 ohne vorheriger Betätigung des anderen Bedienelements 1, das zur Umschaltung in den Manuellmodus M vorgesehen ist, wird eine unmittelbare Hoch- bzw. Rückschaltung ausgeführt. Der so eingelegte Gang wird vorzugsweise zumindest für die Dauer der Betätigung der zweiten Wähleinrichtung 2 bzw. des Hochschalttasters oder des Rückschalttasters beibehalten, falls die Taster derart ausgestaltet sind, dass die Dauer ihrer Betätigung erfasst werden kann. Der Automatikmodus A wird aber beibehalten.

Der Automatikmodus A umfasst mehrere Modi, durch die ein automatischer Gangwechsel durchgeführt wird. Dies ist ein besonders kraftstoffsparender Modus (E-Modus) oder ein sportlicher Modus (S-Modus). Mit Betätigung der zweiten Wähleinrichtung 2 wird auch zwischen den vorhandenen Automatikmodi (E, S) umgeschaltet. Es wird aus Komfortgründen jedoch nicht in den Manuellmodus umgeschaltet. Bei Betätigung der zweiten Wähleinrichtung 2 wird mit einer unmittelbaren Rückschaltung gleichzeitig auch in einen sportlicheren Automatikmodus umgeschaltet, was insbesondere bei Überholvorgängen vorteilhaft ist.

Ein an diese Hoch- bzw. Rückschaltung anschließender Gangwechsel wird entsprechend der Schaltlogik des Automatikmodus A durchgeführt. Die Schaltlogik des Automatikmodus A enthält vorzugsweise eine Gangwechselverhinderung, die hier nach Durchführung der durch die zweite Wähleinrichtung 2 ausgelösten Hoch- oder Rückschaltung bis zum Vorliegen eines definierten Ereignisses einen weiteren Gangwechsel verhindert, wenn dieser gemäß den in der Schaltlogik vorliegenden Schaltkennlinien 5 grundsätzlich vorgegeben wird. Das definierte Ereignis ist die Unterschreitung eines vorgegebenen Schwellwertes des Absolutwertes der Änderung eines Leistungsanforderungssignals in Form des Fahrpedalwinkels FP und/oder der Fahrzeuggeschwindigkeit v nachdem zuvor überhaupt eine Änderung abgewartet und erkannt wurde.

In den Schaltkennlinien 5, die nur schematisch und ausschnittsweise dargestellt sind, soll mit den Betriebspunkten B1 bis B5 ein Beschleunigungsvorgang unter Zuhilfenahme der Erfindung näher dargestellt werden. Es ist eine Rückschaltkennlinie 5-4 dargestellt, gemäß der eine Rückschaltung vom fünften in den vierten Gang einleitbar ist. Weiterhin ist eine Hochschaltkennlinie 4-5 dargestellt, gemäß der eine Hochschaltung vom vierten in den fünften Gang einleitbar ist. Zwischen den beiden Kennlinien ist ein Hysteresebereich vorgesehen. Ausgehend vom einem Automatikmodus A wird im Betriebspunkt B1 durch die Betätigung der Wähleinrichtung 2 vom Steuergerät 3 ohne Umschaltung in den Manuellmodus M bei Vorliegen eines niedrigen Fahrpedalwinkels FP und einer aktuellen Fahrzeuggeschwindigkeit v1 eine Rückschaltung vom fünften in den vierten Gang durchgeführt. Zusätzlich wird vom Steuergerät 3 von einem wirtschaftlichen Automatikmodus (E-Modus) automatisch in einen sportlichen Automatikmodus (S-Modus) umgeschaltet.

Würde nach der Rückschaltung in den vierten Gang der Betriebspunkt B1 beibehalten werden, bei dem gemäß der Hochschaltkennlinie 4-5 der 5. Gang einzulegen wäre, wird gemäß der Erfindung zunächst eine Gangwechselverhinderung (hier Hochschaltverhinderung) aktiviert bis sich der Betriebspunkt, **gekennzeichnet durch** einen Fahrpedalwinkel FP und eine Fahrzeuggeschwindigkeit v, ändert. Hierfür können bezüglich der Änderung des Fahrpedalwinkels und/oder der Fahrzeuggeschwindigkeit Mindest-Änderungsschwellen definiert werden.

Im vorliegenden Beispiel soll jedoch gleichzeitig mit der Betätigung der Wähleinrichtung 2 vom Fahrer der Fahrpedalwinkel FP erhöht werden, so dass sich ein veränderter Betriebspunkt B2 ergibt. Gemäß der Schaltlogik des Automatikmodus A befindet sich der Betriebspunkt B2 im Hysteresebereich, in dem ohnehin kein anschließender Gangwechsel durchgeführt wird. In einem weiteren Betriebspunkt B3 hat der Fahrpedalwinkel FP etwas abgenommen und die Fahrzeuggeschwindigkeit v hat sich auf den neuen Wert v2 erhöht. Auch im Betriebspunkt B3 wird gemäß der Schaltlogik noch kein Gangwechsel vorgenommen. Im nächsten Betriebspunkt B4 hat der Fahrpedalwinkel FP in der Weise abgenommen, dass gemäß der Hochschaltkennlinie 4-5 ein Gangwechsel vom vierten in den fünften Gang grundsätzlich vorgegeben wird. Die Schaltlogik im Automatikmodus berücksichtigt jedoch nicht nur die Schaltkennlinien 5, sondern insbesondere auch den Verlauf des Fahrpedalwinkels FP. Ein Gangwechsel in den fünften Gang wird verhindert, bis sich der Fahrpedalwinkel FP im Wesentlichen nicht mehr ändert. In diesem Fall kann jedoch der Automatikmodus A in bekannter Weise einen Gangwechsel, hier insbesondere eine Hochschaltung, weiter verhindern, wenn der Fahrpedalwinkel FP Null ist (Betriebspunkt B5), da für diesen Sonderfall des stationären Betriebspunktes B5 eher von einem Verzögerungswunsch des Fahrers ausgegangen wird.

Ergänzend wird darauf hingewiesen, dass alternativ oder zusätzlich zur Wähleinrichtung 2 beispielsweise eine Wähleinrichtung 6 in Form eines Sporttasters vorgesehen sein kann, über den dieselbe Funktion ausgelöst werden kann, wie durch den - Taster der Wähleinrichtung 2 zum Auslösen einer Rückschaltung.

Durch diese erfindungsgemäße Vorrichtung wird einerseits dem Leistungswunsch des Fahrers und andererseits auch den Anforderungen an optimalen Komfort Rechnung getragen. Zum einen wird eine leichte Bedienung zum anderen aber auch ein möglichst ruckfreier Gangwechselvorgang erreicht.

## Patentansprüche

1. Vorrichtung zum Steuern eines automatisch schaltenden Getriebes (4) für ein Kraftfahrzeug mit einer ersten Wähleinrichtung (1), mit der zumindest die in einem Automatikmodus (A) einstellbaren Fahrstufen festlegbar sind, mit einer zweiten Wähleinrichtung (2; 6), durch die in einem Manuellmodus (M) die Gänge des Getriebes stufenweise manuell hoch- oder rückschaltbar sind, und mit einem elektronischen Steuergerät (3), das abhängig von den Signalen der Wähleinrichtungen und weiteren Eingangssignalen die Stellglieder des Getriebes ansteuert, wobei das Steuergerät (3) derart ausgestaltet ist, dass bei Betätigung der zweiten Wähleinrichtung (2,6) ausgehend vom Automatikmodus (A) zwar eine unmittelbare Hoch- oder Rückschaltung zugelassen wird, der Automatikmodus (A) aber beibehalten wird und ein an diese Hoch- bzw. Rückschaltung anschließender Gangwechsel entsprechend der Schaltlogik des Automatikmodus (A) durchgeführt wird, **dadurch gekennzeichnet, dass** die Schaltlogik des Automatikmodus (A) bei Betätigung der zweiten Wähleinrichtung (2; 6) mit einer unmittelbaren Rückschaltung gleichzeitig auch in einen sportlicheren Automatikmodus umgeschaltet wird.

2. Vorrichtung nach Patentanspruch 1, **dadurch gekennzeichnet, dass** ausgehend vom Automatikmodus (A) vor Betätigung der zweiten Wähleinrichtung (2; 6), ein anderes Bedienelement (1) zur Umschaltung in den Manuellmodus (M) betätigt werden muss, und dass bei Betätigung der zweiten Wähleinrichtung (2; 6) ohne vorheriger Betätigung des anderen Bedienelements (1) eine unmittelbare Hoch- oder Rückschaltung zugelassen wird, der Automatikmodus (A) aber beibehalten wird und ein an diese Hoch- oder Rückschaltung anschließender Gangwechsel entsprechend der Schaltlogik des Automatikmodus durchgeführt wird.

3. Vorrichtung nach einem der vorangegangenen Patentansprüche, **dadurch gekennzeichnet, dass** die Dauer der Betätigung der zweiten Wähleinrichtung (2; 6) erfasst wird und dass der aufgrund der unmittelbar zugelassenen Hoch- oder Rückschaltung eingelegte Gang zumindest für die Dauer der Betätigung der zweiten Wähleinrichtung (2; 6) beibehalten wird.

4. Vorrichtung nach einem der vorangegangenen Patentansprüche, **dadurch gekennzeichnet, dass** die Schaltlogik des Automatikmodus (A) eine Gangwechselverhinderung enthält, die bis zum Vorliegen eines definierten Ereignisses einen weiteren Gangwechsel verhindert, wenn dieser gemäß den in der Schaltlogik vorliegenden Schaltkennlinien (5) grundsätzlich vorgegeben wird.

5. Vorrichtung nach Patentanspruch 4, **dadurch gekennzeichnet, dass** nach einer durch die Betätigung der zweiten Wähleinrichtung (2; 6) ausgeführten Hoch- oder Rückschaltung zunächst eine Änderung eines Leistungsanforderungssignals (FP) und/oder der Fahrzeuggeschwindigkeit (v) als definiertes Ereignis abgewartet wird.

6. Vorrichtung nach Patentanspruch 5, **dadurch gekennzeichnet, dass** das definierte Ereignis die anschließende Unterschreitung eines vorgegebenen Schwellwertes hinsichtlich der Änderung des Leistungsanforderungssignals (FP) und/oder der Fahrzeuggeschwindigkeit (v) umfasst.

## Claims

1. A device for controlling an automatically shifting transmission (4) for a motor vehicle comprising a first selection mechanism (1), using which it is possible to establish at least the gear selections which can be set in an automatic mode (A), comprising a second selection mechanism (2;6) by which in a manual mode (M) the gears of the transmission can be gradually upshifted or downshifted manually, and comprising an electronic controller (3) which controls the actuators of the transmission as a function of the signals from the selection mechanisms and further input signals, wherein the controller (3) is configured such that upon actuation of the second selection mechanism (2;6), starting from automatic mode (A), a direct upshift or downshift is allowed, but automatic mode (A) is retained and a change of gear following this upshift or downshift is carried out corresponding to the shift logic of the automatic mode (A), **characterised in that** upon actuation of the second selection mechanism (2;6), the shift logic of the automatic mode (A) is simultaneously also changed into a relatively sporty automatic mode with a direct downshift.

2. A device according to claim 1, **characterised in that,** starting from the automatic mode (A), before the second selection mechanism (2;6) is actuated, another control element (1) for changing into the manual mode (M) must be actuated, and **in that** upon actuation of the second selection mechanism (2;6), a direct upshift or downshift is allowed without the other control element (1) being previously actuated, but the automatic mode (A) is retained and a change of gear following this upshift or downshift is carried out corresponding to the shift logic of the automatic mode.

3. A device according to any one of the preceding claims, **characterised in that** the duration of the actuation of the second selection mechanism (2;6) is detected and **in that** the gear engaged due to the directly allowed upshift or downshift is retained at least for the duration of the actuation of the second selection mechanism (2;6).

4. A device according to any one of the preceding claims, **characterised in that** the shift logic of the automatic mode (A) contains a gear change prevention which prevents a further gear change up to the presence of a defined event, if this further gear change is basically predetermined according to the shift characteristics (5) present in the shift logic.

5. A device according to claim 4, **characterised in that** after an upshift or downshift carried out by the actuation of the second selection mechanism (2;6), a change in a power demand signal (FP) and/or in the vehicle speed (v) is initially awaited as a defined event.

6. A device according to claim 5, **characterised in that** the defined event comprises the change in the power demand signal (FP) and/or in the vehicle speed (v) subsequently falling below a predetermined threshold value.

## Revendications

1. Dispositif de commande d'une boîte de vitesses (4) à commutation automatique de véhicule automobile comportant une première installation de sélection (1) permettant de fixer au moins les rapports de vitesses réglables en mode automatique (A), une seconde installation de sélection (2 ; 6) qui permet de monter ou de descendre manuellement (M) les rapports de la boîte de vitesses, pas à pas, en mode manuel, ainsi qu'un appareil de commande électronique (3) qui commande les actionneurs de la boîte de vitesses, en fonction des signaux des installations de sélection ainsi que d'autres signaux d'entrée,
l'appareil de commande (3) étant réalisé pour qu'en actionnant la seconde installation de sélection (2 ; 6) à partir du mode automatique (A) une montée de rapport ou une descente de rapport, directes sont certes autorisées mais le mode automatique (A) reste conservé et selon la logique de commutation du mode automatique (A) on effectue un changement de rapport consécutif à cette montée de rapport ou rétrogradation, selon la logique de commutation du mode automatique (A),
**caractérisé en ce que**
lors de l'actionnement de la seconde installation de sélection (2 ; 6) la logique de commutation du mode automatique (A) commute avec une rétrogradation directe, simultanément, également sur un mode automatique plus sportif.

2. Dispositif selon la revendication 1,
**caractérisé en ce que**
partant du mode automatique (A), avant d'actionner la seconde installation de sélection (2 ; 6) il faut actionner un autre élément de commande (1) pour commuter dans le mode manuel (M) et lorsque la seconde installation de sélection (2 ; 6) est actionnée sans actionnement préalable de l'autre élément de service (1), on autorise une montée ou une descente directe des rapports que le mode automatique (A) conserve, et le changement de vitesses, qui est directement adjacent à cette montée ou descente de rapport, est effectué selon la logique de commutation du mode automatique.

3. Dispositif selon l'une des revendications précédentes,
**caractérisé en ce qu'**
on saisit la durée d'actionnement de la seconde installation de sélection (2 ; 6) et à partir de la montée ou de la descente de vitesse directement autorisée, on conserve le rapport de vitesses passé au moins pour la durée d'actionnement de la seconde installation d'actionnement (2 ; 6).

4. Dispositif selon l'une des revendications précédentes,
**caractérisé en ce que**
la logique de commutation du mode automatique (A) contient un moyen évitant le changement de rapport qui évite un autre changement de rapport jusqu'en présence d'un événement défini, si ce rapport est pré-défini fondamentalement selon les caractéristiques de commutation (5) disponibles dans la logique de commutation.

5. Dispositif selon la revendication 4,
**caractérisé en ce qu'**
après une monté ou une descente de rapport exécutée par l'actionnement de la seconde installation de sélection (2 ; 6), on attend tout d'abord un changement du signal de demande de puissance (FP) et/ou la vitesse du véhicule (v) comme événement défini.

6. Dispositif selon la revendication 5,
**caractérisé en ce que**
l'événement défini est le passage consécutif sous un seuil prédéterminé relatif à la variation du signal de demande de puissance (FP) et/ ou de la vitesse (v) du véhicule.
